# FASCICULE DE BREVET EUROPEEN

(11) **EP 0 842 597 B1**
(45) Date de publication et mention de la délivrance du brevet: **11.07.2001**
(21) Numéro de dépôt: 97420213.7
(22) Date de dépôt: 14.11.1997
(51) Int. Cl.: A01F 25/14

(54) **Appareil de gainage de végétaux compactés sous film plastique tubulaire**
Überziehen von gepresstem Gut mit einer Schlauchfolie
Sheathing device for compacted vegetable matter in a plastic film tube

(30) Priorité: 14.11.1996 FR 9614106
(43) Date de publication de la demande: 20.05.1998
(73) Titulaire: BRULE, Marie Madeleine, épouse DUJOURDY, 74000 Annecy (FR); BRULE, Pierre Germain Emile, 69290 Craponne (FR); BRULE, Jean Jacques, 38090 Villefontaine (FR); BRULE, Yves Patrick Charkes Gustave, 69860 Saint Christophe La Montagne (FR); Chenavas, Dominique, 63210 Ceyssat (FR)
(72) Inventeur: Brûlé, Jean, 01130 Les Neyrolles (FR); Chenavas, Dominique, 63210 Ceyssat (FR)
(74) Mandataire: Bratel, Gérard

(56) Documents cités:
- EP-A- 0 111 434
- GB-A- 2 227 220

## Description

La présente invention concerne un appareil de gainage ou ensilage de végétaux compactés, notamment de balles de fourrage, sous un film plastique tubulaire se présentant comme une gaine élastiquement étirable, l'appareil comprenant un système d'étirement de la couronne formée par la gaine non dépliée, pour permettre l'introduction des balles de fourrage.

L'ensilage d'herbe préfanée en balles rondes s'est développé, au cours des dernières années, grâce à la mécanisation de la pose d'un film plastique, plus particulièrement en polyéthylène, autour des balles de fourrage. Le film en polyéthylène est une composante essentielle de cette technique, puisqu'il protège le fourrage et permet sa stabilisation par anaérobiose, pendant sa phase de stockage, avant sa consommation par les ruminants.

Plusieurs systèmes mécaniques de pose de film en polyéthylène ont ainsi été déjà proposés.

Un premier système mécanique connu utilise du polyéthylène sous la forme d'un film étirable, conçu pour cette application. Dans cette catégorie, on distingue les enrubanneuses dites "monoballes" et les enrubanneuses "en continu".

Les enrubanneuses monoballes sont des machines permettant d'envelopper totalement et hermétiquement, une par une, les balles de fourrage préfanées. Pour ce faire, elles utilisent du polyéthylène se présentant sous la forme de bobines de film étirable. Ces bobines, ayant un poids d'environ une trentaine de kilogrammes, sont de largeur et de longueur variables. L'épaisseur du film est proche de 25 microns. C'est la superposition des couches du film étirable (généralement quatre couches) qui assure l'étanchéité autour de la balle et qui permet ainsi son stockage et sa conservation. Ce premier type de machines n'est pas directement concerné par la présente invention.

Les enrubanneuses en continu posent les différentes couches de ce même film étirable, présenté en bobine, uniquement sur les faces arrondies des balles de fourrage, ceci pour augmenter la capacité du chantier et réaliser des économies de film. Un "boudin" formé de plusieurs balles déposées les unes contre les autres est ainsi constitué. Ce deuxième type de machines n'est, lui non plus, pas directement concerné par la présente invention, dans la mesure où il concerne la superposition de plusieurs couches de film.

Un autre système mécanique existant utilise un film polyéthylène se présentant sous la forme d'une gaine élastiquement étirable, conçue pour cette application. La gaine étirable est plus résistante, plus épaisse (épaisseur constante d'environ 100 microns) et plus étanche que le film précité. En particulier, elle présente l'avantage d'une régularité d'épaisseur, donc d'une meilleure étanchéité, qu'il est difficile d'obtenir par la seule superposition des couches d'un même film étirable.

En effet, dans les systèmes mécaniques précédents le phénomène de non-étanchéité est particulièrement accru lorsque les balles de fourrage ont été mal formées lors du compactage, lorsque les chantiers sont trop rapides, ou en cas de mauvais réglages des enrubanneuses. Ce manque d'étanchéité conduit inévitablement à des pertes de fourrage pendant la phase de stockage, par pourriture ; ces pertes de fourrage ont de graves conséquences sur le bilan économique d'une exploitation agricole.

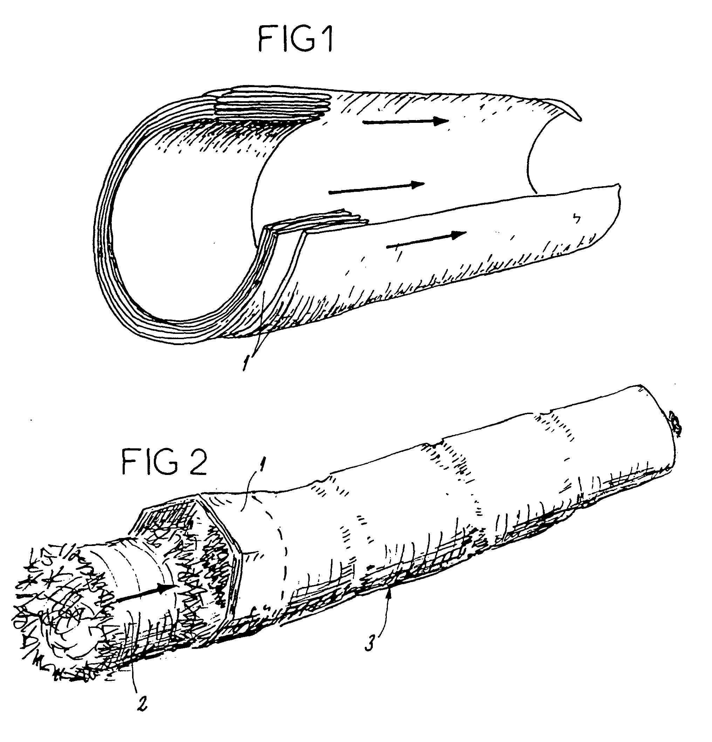

La gaine étirable se présente au départ sous la forme d'une couronne constituée par l'agencement d'une succession de plis circulaires 1, comme montré sur la figure 1 du dessin schématique annexé. Ces plis circulaires peuvent se déplier, suivant l'axe longitudinal, comme indiqué par les flèches de cette figure.

Il est nécessaire d'augmenter le diamètre de la gaine étirable, pour :
- permettre l'introduction d'une balle 2 de fourrage par une extrémité de la gaine, et constituer ainsi un "boudin" d'ensilage d'herbe préfanée, tel que schématisé en 3 sur la figure 2, puis
- permettre à la gaine en polyéthylène d'épouser et d'enserrer, grâce à sa mémoire élastique, la balle de fourrage, en chassant l'air pour favoriser ainsi la stabilisation du fourrage en anaérobiose.

Les machines actuelles, utilisant ce procédé, sont autonomes avec leur source d'énergie propre et des systèmes de contrôle à automatisme électro-hydraulique ou seulement hydraulique.

Le fonctionnement de ces machines est le suivant :

Le groupe moteur thermo-hydraulique de la machine étant en marche continue, le tracteur de l'utilisateur dépose une balle de fourrage sur un berceau. Cela provoque l'entraînement d'un poussoir qui introduit la balle dans l'ouverture polygonale de la gaine. Quand la balle introduite bute contre la balle précédente déjà en place dans la gaine, par réaction mécanique le poussoir provoque l'avance de la machine qui développe alors la gaine autour de la nouvelle balle introduite, jusqu'en fin de course du poussoir où se situe la commande de son retour en position de départ, et ainsi de suite...

Ces machines sont importantes et d'un investissement lourd, auquel s'ajoutent les frais de fonctionnement résultant de leur motorisation autonome.

L'étirage polygonal de la couronne formée par la gaine se fait à l'aide d'une série de vérins hydrauliques disposés en étoile sur un cadre adapté. La couronne formée par la gaine non dépliée est engagée par sa partie basse sous une table en auge destinée au glissement des balles dans la gaine. Par sa partie haute, de même que par ses parties latérales, la couronne repose sur des palettes de forme fixées en bout des tiges des vérins hydrauliques d'étirage.

Ce dispositif présente quelques inconvénients. L'un d'eux est le dépassement des vérins latéraux, augmentant l'encombrement routier de la machine. Les autres inconvénients sont la nécessité d'une source d'énergie autonome et surtout l'hétérogénéité de l'étirement de la gaine. En effet, la table inférieure en auge ainsi que la largeur des palettes de forme bloquent le film plastique adhérant à leur surface, et seules sont étirées les portions de gaine situées entre les palettes, ou entre la table et les palettes, l'ensemble de ces portions ne représentant que 50% à 60% de la périphérie totale de la gaine. Il s'ensuit la présence de zones à amincissement exagéré, entraînant une fragilisation de la gaine, elle-même nuisible à la fiabilité de l'étanchéité dans le temps.

Des machines de ce dernier type sont décrites dans les brevets US 5.220.772, 5.323.591, 5.398.487 et 5.421.144, ainsi que dans la demande de brevet canadien 2.111.546.

Le demande de brevet internationale WO 91/07867 montre un appareil similaire, mais utilisant pour l'étirage polygonal de la gaine un vérin hydraulique unique, dont le mouvement est transmis par un ensemble de leviers et de bielles. Cette réalisation particulière conserve aussi l'inconvénient d'un dépassement latéral du vérin.

On connaît encore, par la demande de brevet internationale WO 89/06499, une machine qui utilise les mouvements de va-et-vient d'un tracteur pour remplir et déplier une gaine non étirable en polyéthylène autour de balles de fourrage. Toutefois, cette machine est limitée à une application très particulière, puisqu'elle est liée au traitement des pailles à l'ammoniac.

Les documents GB2 227 220A et EP 111 434 A concernent des appareils suivant le préambule de la revendication 1. La présente invention vise à pallier l'essentiel des inconvénients précédemment cités, en fournissant un appareil dont le fonctionnement ne nécessite que l'énergie et les mouvements du tracteur, à l'exclusion de toute source d'énergie autonome, la conception de cet appareil permettant d'obtenir un étirement homogène de la gaine, garantissant la conservation de l'étanchéité dans le temps, tout en permettant la réduction de la largeur de l'appareil pour son déplacement sur route.

A cet effet, l'invention a essentiellement pour objet un appareil de gainage de végétaux compactés sous film plastique tubulaire, du genre précisé en introduction, dans lequel les éléments du système d'étirement sont montés sur un cadre transversal sensiblement vertical, porté par un châssis monté sur des roues, cet appareil étant utilisable en combinaison avec un tracteur équipé d'un plastron à fourche ou à broche apte à recevoir une balle à introduire dans la gaine, l'appareil étant caractérisé en ce que :
- son châssis porte au moins un crochet effaçable vers l'avant et vers l'arrière, et rappelé vers une position moyenne relevée, prévu pour coopérer avec un organe transversal d'attelage tel que cylindre d'attelage, monté sous le plastron, et
- des moyens de détection, sensibles à la présence d'une balle introduite dans la gaine, sont aussi portés par le châssis, et sont prévus pour arrêter temporairement le ou les crochets en position relevée,
de telle sorte que :
- le tracteur permet l'introduction d'une balle dans l'ouverture de la gaine étirée, sans déplacer l'appareil, en faisant basculer le ou les crochets vers l'arrière, au passage de l'organe transversal d'attelage,
- puis, le tracteur se dégageant, les moyens de détection de la présence d'une balle introduite et d'arrêt du ou des crochets en position relevée sont activés, et le tracteur entraîne avec lui, par l'intermédiaire de l'organe transversal d'attelage et du ou des crochets, l'appareil qui roule alors au sol par ses roues, ce mouvement entraînant le dépliage d'une certaine longueur de gaine,
- enfin le ou les crochets sont libérés par les moyens précités et, s'effaçant vers l'avant, il(s) permet(tent) le dégagement complet du tracteur.

Ce dernier peut alors aller chercher la balle suivante, pour l'introduire selon le même processus dans la gaine dont le précédent dépliage a dégagé un volume libre apte à recevoir cette nouvelle balle, et ainsi de suite...

Selon un mode de réalisation de l'invention, on prévoit deux crochets symétriques, normalement maintenus sensiblement verticaux par des ressorts de rappel, et solidaires d'un même arbre transversal porté par des consoles fixées sur une traverse du châssis de l'appareil.

Dans une forme de réalisation avantageuse, le ou chaque crochet est équipé d'un galet inférieur, prévu pour coopérer avec la partie antérieure d'un tiroir monté coulissant en direction longitudinale sur le châssis et rappelé vers l'avant par au moins un ressort, tandis que les moyens de détection d'une balle introduite dans la gaine comprennent au moins un bras de levier latéral qui est monté pivotant sur le châssis, qui porte au moins un organe de palpage apte à s'appliquer sur un flanc de la gaine, et qui est solidaire d'un doigt coopérant avec la partie postérieure du tiroir. Plus particulièrement, le ou chaque bras de levier est monté pivotant sur le châssis autour d'un axe sensiblement vertical, et il porte vers son extrémité libre, en tant qu'organe(s) de palpage, au moins une roue horizontale, montée librement tournante sur un arbre vertical.

Selon la présence ou l'absence d'une balle au point sur lequel s'appliquent les roues de palpage, le ou chaque bras de levier occupe une position angulaire différente, et il en est de même pour le doigt solidaire de ce bras de levier. La partie postérieure du tiroir comporte de préférence au moins une petite rampe inclinée, avec laquelle coopère le doigt précité ; ainsi, selon sa position angulaire, ce doigt pousse et maintient le tiroir dans sa position de blocage du ou des crochets, ou libère le tiroir ainsi que le ou les crochets.

Le déplacement discontinu de l'appareil selon l'invention, permettant le dépliage de la gaine et l'introduction de balles supplémentaires, s'opère ainsi par attelage et désaccouplement alternés et automatiques du tracteur, sans intervention du conducteur du tracteur et sans source d'énergie particulière, grâce aux moyens de détection qui établissent mécaniquement une relation entre la présence et la longueur d'une balle, d'une part, et le mouvement de recul du tracteur, d'autre part.

Selon un autre aspect avantageux de la présente invention, le système d'étirement de la couronne formée par la gaine non dépliée, pour l'introduction des balles, comprend un ensemble de bielles toutes articulées par une extrémité sur le cadre transversal autour d'axes sensiblement horizontaux et parallèles entre eux, chaque bielle portant vers son extrémité libre ou tête un cylindre d'étirage monté libre en rotation autour d'un axe parallèle à l'axe d'articulation de cette bielle sur le cadre, le cylindre étant prévu pour être engagé dans la couronne formée par la gaine non dépliée, et des moyens d'actionnement étant prévus pour commander la rotation simultanée de toutes les bielles, dans un sens correspondant à l'ouverture de ladite couronne, de manière à obtenir un étirement homogène de la gaine.

Selon un mode de réalisation, les moyens d'actionnement comprennent, pour chaque bielle portant un cylindre d'étirage, un vérin hydraulique dont la tige est articulée par son extrémité à la tête de la bielle, et dont le corps est lié de façon articulée au cadre. Les vérins hydrauliques d'actionnement des bielles sont avantageusement eux-mêmes actionnés par un distributeur hydraulique manuel, prévu pour être relié momentanément à la pompe hydraulique du tracteur.

De préférence, la tête de chaque bielle porte un palier monté oscillant autour d'un axe parallèle à l'axe d'articulation de la bielle sur le cadre, le palier portant lui-même le cylindre d'étirage, monté libre en rotation autour d'un axe parallèle à l'axe d'oscillation du palier. Cette disposition autorise un mouvement pendulaire de chaque cylindre d'étirage, relativement à la tête de la bielle associée. Selon une caractéristique complémentaire, compte tenu du décalage longitudinal entre la tête de chaque bielle et le palier associé, cette tête se situe sensiblement au milieu de la longueur du cylindre d'étirage associé, ce qui réalise un montage équilibré.

Ainsi est réalisé un appareil de gainage dont le système d'étirement de la gaine plastique, constitué de bielles articulées mues par des vérins et portant des cylindres, permet une répartition régulière de l'amincissement de la couronne formée par la gaine, sur la totalité de sa périphérie, puisqu'il n'y a aucun blocage par adhérence sur une surface fixe, le contact de la gaine avec les cylindres d'étirage étant pratiquement linéaire. La régularité de l'étirage assure aussi un retour parfait de la gaine autour des balles de fourrage, par effet de mémoire élastique.

Pour apprécier toute l'importance de cet avantage, il convient de noter que le gainage, ou ensilage, de végétaux sous film plastique tubulaire ne répond pas seulement à la nécessité de les mettre à l'abri des intempéries. Pour une bonne conservation de ces produits, il est aussi indispensable de limiter au maximum les échanges gazeux avec l'air ambiant, d'où l'intérêt d'utiliser la mémoire élastique du film plastique qui se rétracte autour des balles de fourrage, pour n'emprisonner qu'un volume minimal d'air. Un étirement régulier du film supprime les zones excessivement amincies, donc fragilisées et trop faibles pour assurer un rétreint correct et fiable du même film. Ces zones fragilisées sont, de plus, sujettes à la porosité allant jusqu'au percement, en provoquant alors la communication directe et nuisible avec l'air extérieur, d'où l'importance de leur suppression.

Selon une autre caractéristique avantageuse, les bielles et leurs moyens d'actionnement, tels que vérins, sont montés uniquement sur les montants latéraux du cadre transversal, et chaque montant latéral est lui-même monté tournant sur 90° autour d'un axe vertical, par des pivots inférieur et supérieur, pour permettre un rabattement de ce montant et des bielles, avec leurs moyens d'actionnement, dans un plan vertical parallèle à la direction longitudinale de l'appareil, de manière à réduire la largeur de l'appareil pour son déplacement sur route ou sur chemins ; des moyens sont naturellement prévus, pour immobiliser les montants en position déployée et en position rabattue.

Dans la mesure où la réalisation précédemment définie situe les bielles latéralement, le système d'étirement de la gaine comprend encore avantageusement des cylindres d'étirage inférieurs, libres en rotation mais d'axes fixes.

Le système d'étirement peut être encore complété par des guides de profil adapté, associés aux cylindres d'étirage, qui évitent la déviation de l'appareil de son axe normal de travail, en absorbant les efforts transversaux dus à un désalignement lors de l'introduction d'une balle de fourrage.

Selon un autre aspect avantageux de la présente invention, l'appareil est pourvu de moyens additionnels prévus pour déployer, en même temps que la gaine, un filet flottant entourant cette gaine et ayant un effet répulsif sur les animaux nuisibles, qu'il s'agisse d'oiseaux ou de petits rongeurs, ce qui apporte une amélioration supplémentaire à la protection des fourrages ensilés. On sait en effet que ces animaux peuvent être tenus éloignés par un écran léger, coloré et surtout animé, ce qui impose ici l'utilisation d'un filet qui, contrairement à la gaine, n'a pas de mémoire élastique et se dépose sans rétreint, en restant suffisamment flottant pour bouger au moindre souffle d'air. Pour la mise en place d'un tel filet, il est simplement prévu, au niveau de chaque cylindre d'étirage, deux baguettes fixées de part et d'autre du palier portant ledit cylindre, et parallèles à l'axe de ce cylindre, le filet initialement plié étant posé sur les baguettes.

Dans l'ensemble, on obtient ainsi un appareil de gainage qui, tout en restant de structure relativement simple et de fabrication économique, assure un étirage homogène de la gaine, et est aussi d'une utilisation simple et commode, notamment du fait qu'il n'exige aucune source d'énergie autonome, l'énergie provenant du seul tracteur étant utilisée aussi bien pour l'étirage de la gaine que pour le déploiement longitudinal de cette gaine et l'introduction successive des balles de fourrage dans celle-ci. Cet appareil peut aussi être remorqué sans précautions particulières liées au gabarit routier, voire même partiellement démonté pour un stockage ou un transport sous faible volume, ceci grâce à sa simplicité d'assemblage.

De toute façon, l'invention sera mieux comprise, et d'autres caractéristiques seront mises en évidence, à l'aide de la description qui suit, en référence au dessin schématique annexé représentant, à titre d'exemple, une forme d'exécution de cet appareil de gainage de végétaux compactés sous film plastique tubulaire :
Figure 3 est une vue en perspective, partielle, de cet appareil, montrant l'une des bielles du système d'étirement et les organes associés ;
Figure 4 est une vue de face partielle de l'appareil, avec indication de deux positions de l'ensemble de bielles ;
Figure 5 est une vue très partielle, en plan par dessus de cet appareil, illustrant le pivotement d'un montant latéral du cadre ;
Figure 6 est une vue en perspective du plastron d'un tracteur utilisable avec l'appareil objet de l'invention ;
Figure 7 est une vue de côté du châssis de cet appareil ;
Figure 8 et 9 sont des demi-vues en plan par dessus du châssis, dans deux phases successives du cycle de chargement d'une balle dans la gaine ;
Figures 10, 11 et 12 sont des schémas illustrant, en vue de côté, trois phases successives du cycle de chargement d'une balle dans la gaine ;
Figure 13 est une vue partielle, en perspective, d'une variante de l'appareil adaptée pour la pose d'un filet autour de la gaine.

L'appareil de gainage de végétaux compactés, représenté au dessin, comporte un châssis 4 monté sur des roues 5, sur lequel est monté un cadre polygonal 6, disposé transversalement, qui comprend deux montants latéraux 7, reliés entre eux par une traverse supérieure 8. Le cadre 6 supporte un système d'étirement pour la gaine plastique 1, dans laquelle doivent être successivement introduites les balles de fourrage 2.

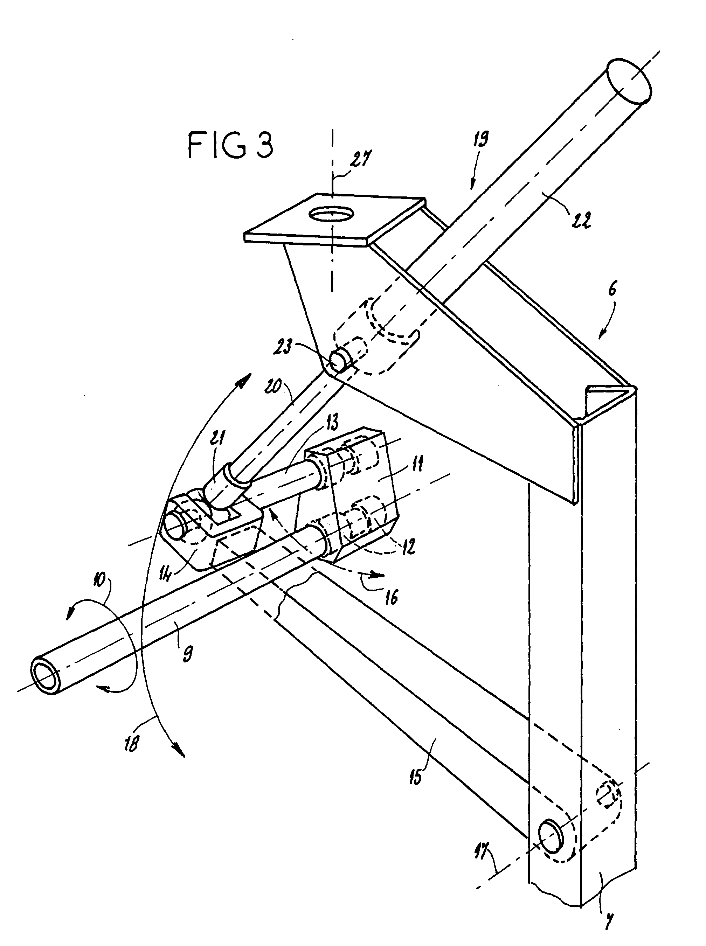

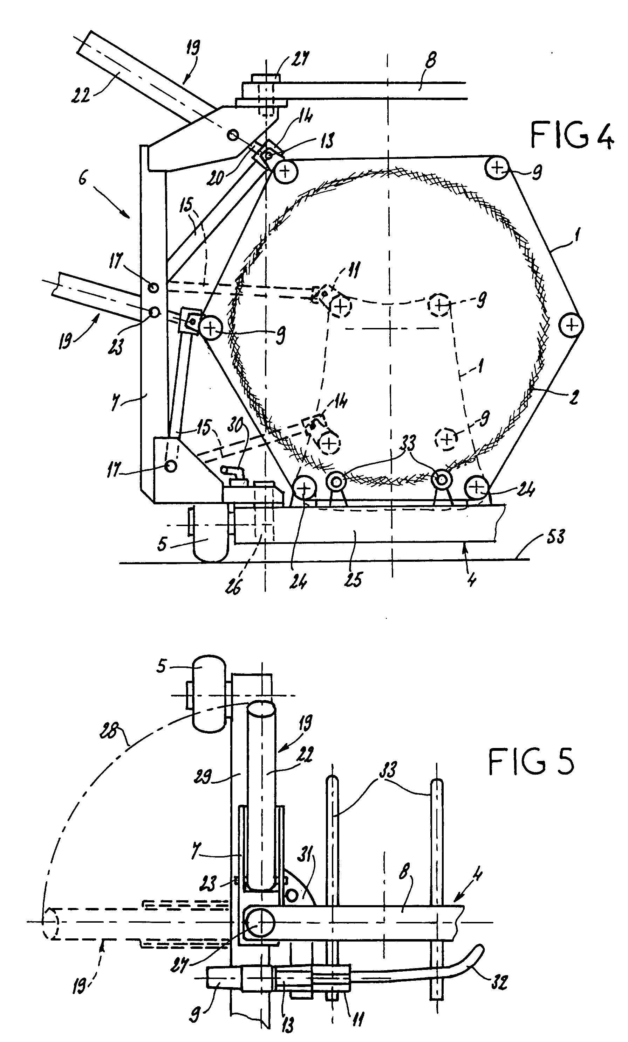

Le système d'étirement, représenté aux figures 3 et 4, comprend plusieurs cylindres horizontaux 9, pleins ou tubulaires, d'axes parallèles entre eux et à la direction longitudinale de l'appareil, sur lesquels peut s'engager la couronne formée par la partie non dépliée de la gaine 1. La figure 3 montre, en détail, l'élément de base de ce système d'étirement, constitué par un cylindre d'étirage 9 et par les organes associés.

Chaque cylindre d'étirage 9 est monté libre en rotation, comme indiqué par la flèche 10 de la figure 3, et tourne dans un palier prismatique 11, au moyen de douilles à aiguilles 12 par exemple.

Le palier 11 comporte un axe fixe 13, cylindrique ou non, qui est parallèle au cylindre d'étirage 9. L'axe 13 est maintenu par une chape 14, formant la tête d'une bielle 15. Cette disposition rend le palier 11 oscillant et autorise un mouvement pendulaire du cylindre 9, selon la courbe 16, autour de l'axe 13.

La bielle 15 est articulée, par son extrémité éloignée de la chape 14, autour d'un axe horizontal 17, sur un montant latéral 7 du cadre polygonal 6. Ainsi, la tête de la bielle 15 possède un débattement circulaire, selon la courbe 18.

Le mouvement de pivotement de la bielle 15 autour de l'axe horizontal 17 est commandé par un vérin hydraulique 19, dont la tige 20 est liée de façon articulée, par son extrémité extérieure 21, à l'axe 13, au niveau de la chape 14. Le corps 22 du vérin 19 est lié mécaniquement au montant latéral 7 du cadre 6 par des tourillons 23.

Il est à noter que la prise d'articulation de la chape 14 de la bielle 15, et de l'extrémité 21 de la tige de vérin 20, se situe au milieu de la longueur du cylindre 9 associé, pour réaliser un montage équilibré évitant le couple déformant résultant d'une contrainte en porte-à-faux.

Dans l'ensemble, comme le montre la figure 4, deux bielles 15 correspondant à la description précédente sont articulées , à des hauteurs différentes, sur le montant latéral 7 gauche et, de façon symétrique, deux autres bielles sont articulées sur le montant latéral droit du cadre 6. L'étirage se fait ainsi à l'aide de quatre cylindres 9 mobiles, portés par quatre bielles 15 respectives, mues respectivement par quatre vérins 19.

Le système d'étirement comprend encore deux cylindres inférieurs 24, montés libres en rotation autour d'axes horizontaux fixes, sur une traverse inférieure 25 du châssis 4 située à la base du cadre 6. Ces deux cylindres "fixes" inférieurs 24 sont, eux aussi, disposés symétriquement par rapport au plan médian vertical de l'appareil.

En période d'étirage, la couronne formée par la gaine 1 passe sur les quatre cylindres 9 portés par les bielles 15, et sous les deux cylindres "fixes" inférieurs 24. Les vérins 19 sont actionnés de façon simultanée par un distributeur hydraulique approprié (non représenté), relié momentanément à la pompe hydraulique d'un tracteur agricole par des raccords rapides et des flexibles, ces composants étant d'utilisation courante de sorte qu'il n'est pas nécessaire de les décrire ici plus en détail, ni de les illustrer. Chaque vérin 19, exerçant alors une traction sur la tête de la bielle 15 associée, fait décrire à celle-ci un mouvement rotatif selon la courbe 18, dans un sens qui l'éloigne du centre du cadre 6. L'oscillation du vérin 19, inhérente à ce mouvement, est autorisée par les tourillons 23.

Au cours de ce mouvement, chaque cylindre d'étirage 9 peut rouler à l'intérieur de la couronne formée par la gaine 1, en tournant autour de son propre axe selon la flèche 10. De plus, le palier 11 pivotant autour de l'axe 13 autorise le mouvement pendulaire du cylindre 9 selon la courbe 16, et permet ainsi à ce cylindre 9 de se positionner correctement au fond de l'angle correspondant du profil polygonal d'étirement de la gaine 1.

Ainsi, partant d'une position d'introduction de la gaine 1 posée sans tension sur les cylindres 9 et 24 (tracé en trait discontinu de la figure 4), l'actionnement simultané des vérins 19 provoque le relevage des bielles 15 et leur écartement, ce qui permet d'étirer cette gaine 1 pour former une large ouverture polygonale, dans l'exemple illustré de forme hexagonale, qui est prête à admettre l'introduction des balles de fourrage 2.

En se référant aux figures 4 et 5, il est à remarquer que chaque montant latéral 7 du cadre 6 est monté tournant sur la traverse inférieure 25 du châssis 4 par un pivot inférieur 26. La traverse supérieure 8 du cadre 6 est articulée par chaque extrémité, au sommet du montant latéral 7 correspondant, par un pivot supérieur 27, aligné verticalement avec le pivot inférieur 26 correspondant. Ce dispositif permet à l'ensemble formé par chaque montant latéral 7, et par les deux bielles 15 et les deux vérins 19 correspondants, de pivoter autour d'un axe vertical, entre deux positions séparées par une rotation de 90°, symbolisée par la courbe en quart de cercle 28 de la figure 5.

En position de travail (figure 4 et tracé en trait discontinu de la figure 5), chaque montant latéral 7 est déployé latéralement, et se situe dans le plan vertical transversal du cadre 6. La rotation de 90° de ce montant latéral 7 l'amène dans une position rétractée (tracé en trait continu de la figure 5), en alignement avec un longeron 29 du châssis 4, les bielles 15 et les vérins 19 étant alors placés dans le même alignement. La largeur de l'appareil se trouve ainsi fortement réduite, et permet le déplacement aisé de cet appareil sur route, sur chemins et autres passages étroits.

Une goupille amovible 30, associée à des perçages appropriés ménagés dans un secteur d'appui 31, permet de bloquer chaque ensemble "montant latéral 7 - bielles 15 - vérins 19" dans l'une ou l'autre des deux positions précédemment décrites, le retrait de la goupille 30 autorisant la rotation de cet ensemble.

En position de travail, la traverse supérieure 8 du cadre 6 maintient l'écartement voulu des deux montants latéraux 7, et "encaisse" les efforts opposés de traction des vérins 19 situés respectivement du côté gauche et du côté droit.

Le système d'étirement est complété par deux équipements qui permettent de corriger un défaut de présentation (désalignement) des balles de fourrage 2. D'une part, en prolongement des deux cylindres d'étirage 9 latéraux, il est prévu un tube de guidage 32 cintré vers l'extérieur, ce tube 32 étant fixé sur le palier prismatique 11 - voir figure 5, en bas. D'autre part, deux tubes de guidage inférieurs 33 en forme de ski inversé sont fixés à la traverse 25 du châssis 4, entre les deux cylindres inférieurs 24, pour glisser la balle de fourrage 2 au-dessus de ces cylindres 24.

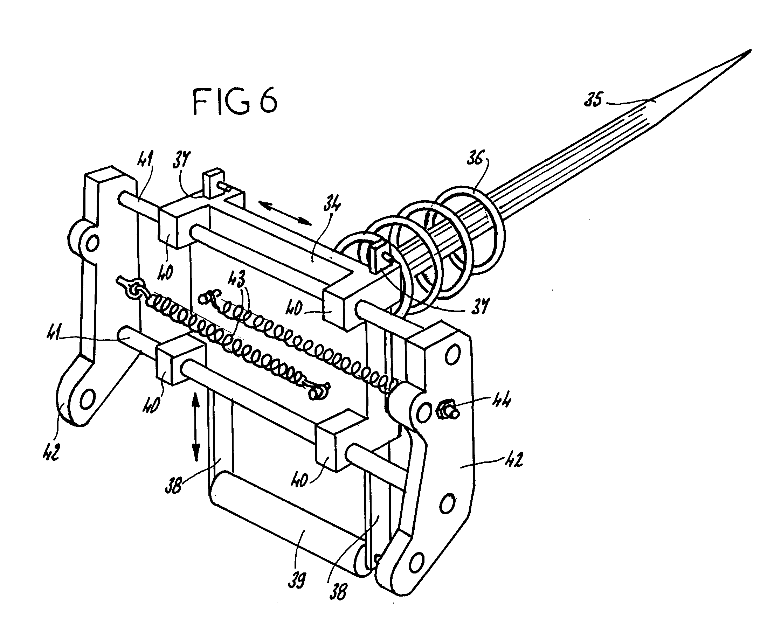

Pour le transfert des balles de fourrage 2 dans l'appareil, le "pantographe" du tracteur doit être équipé d'un plastron 34, montré sur la figure 6. Au centre du plastron 34 est fixée une broche 35 sensiblement horizontale, d'une longueur adéquate, entourée à sa base d'un ressort de compression 36 destiné à maintenir la balle nouvellement introduite en contact contre la balle qui a été introduite au cycle précédent, ceci au moment du dégagement en recul de la broche 35.

Le plastron 34 comporte, latéralement, deux paliers verticaux 37 permettant le coulissement vertical de deux barres verticales 38, portant à leur base un cylindre horizontal 39, libre en rotation autour de son axe, destiné à la liaison d'attelage de l'appareil de gainage avec le tracteur, durant la phase de recul nécessaire (comme détaillé ci-après).

Le plastron 34 comporte quatre autres paliers horizontaux 40, permettant un certain coulissement latéral sur deux tiges entretoises cylindriques horizontales 41, qui relient deux adaptateurs latéraux 42 destinés à être montés sur le tracteur. La représentation de ces derniers est quelconque et ne saurait être limitative, les adaptateurs 42 étant spécifiques à chaque type de tracteur.

Le coulissement latéral du plastron 34 sur les tiges entretoises 41 vise à éviter à l'appareil de gainage d'encaisser un choc dû au désalignement d'une balle de fourrage 2, qui aurait pour effet de déplacer l'axe de cet appareil. Deux ressorts de rappel 43 montés en opposition, et associés à des tendeurs de réglage 44, maintiennent et ramènent le plastron 34 au centre du dispositif.

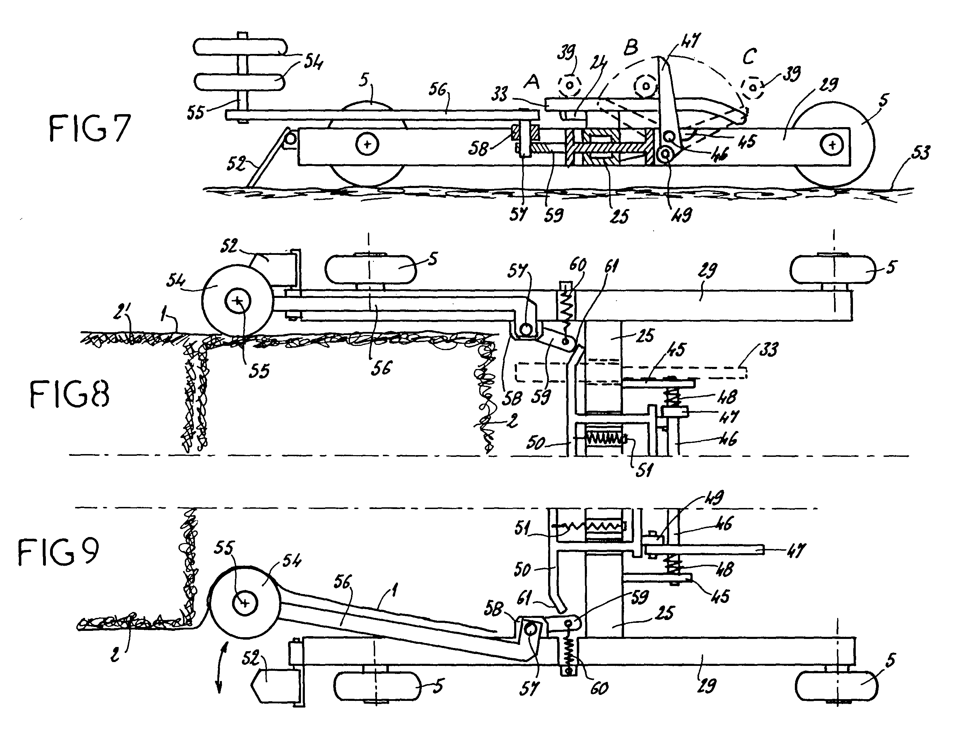

Les figures 7, 8 et 9 montrent l'appareil de gainage sans ses superstructures, donc principalement le châssis 4 avec ses longerons 29 et sa traverse 25, les roues 5 montées à l'avant et à l'arrière de chaque longeron 29, et les organes directement montés sur le châssis 4.

Sur la traverse 25 sont fixées deux consoles horizontales 45 s'étendant vers l'avant entre les deux longerons 29. Un arbre horizontal 46 est monté transversalement, de façon pivotante, entre les deux consoles 45. L'arbre 46 est solidaire de deux crochets 47, normalement maintenus sensiblement verticaux par deux ressorts de rappel 48, autorisant cependant le basculement des crochets 47 vers l'avant et vers l'arrière, comme le montrent les tracés en trait discontinu de la figure 7.

Chaque crochet 47 est équipé d'un galet inférieur 49, prenant appui sur la partie antérieure, en forme de plaque, d'un tiroir 50 monté coulissant, dans le sens longitudinal de l'appareil, à travers la traverse 25. Le tiroir 50 est rappelé vers l'avant par deux ressorts de traction 51.

A l'arrivée de chaque longeron 29 du châssis 4, au-delà de la roue 5 correspondante, est articulée une bêche anti-recul 52, dont la pointe est apte à s'ancrer dans le sol 53 sur lequel repose et roule l'appareil.

Chaque longeron 29 est encore équipé d'un dispositif de contrôle automatique d'avance de l'appareil, par détection des balles de fourrage 2. Ce dispositif comprend deux roues de palpage horizontales latérales 54, superposées, qui tournent librement sur un même arbre vertical 55 solidaire de l'extrémité postérieur d'un bras de levier horizontal 56, dont l'autre extrémité est articulée, par un axe vertical 57, à un palier 58 solidaire du longeron 29. L'axe 57 est aussi solidaire d'un doigt 59, lié à un ressort de rappel 60. Le doigt 59 est prévu pour coopérer avec une petite rampe inclinée latérale 61, formée à l'arrière du tiroir 50.

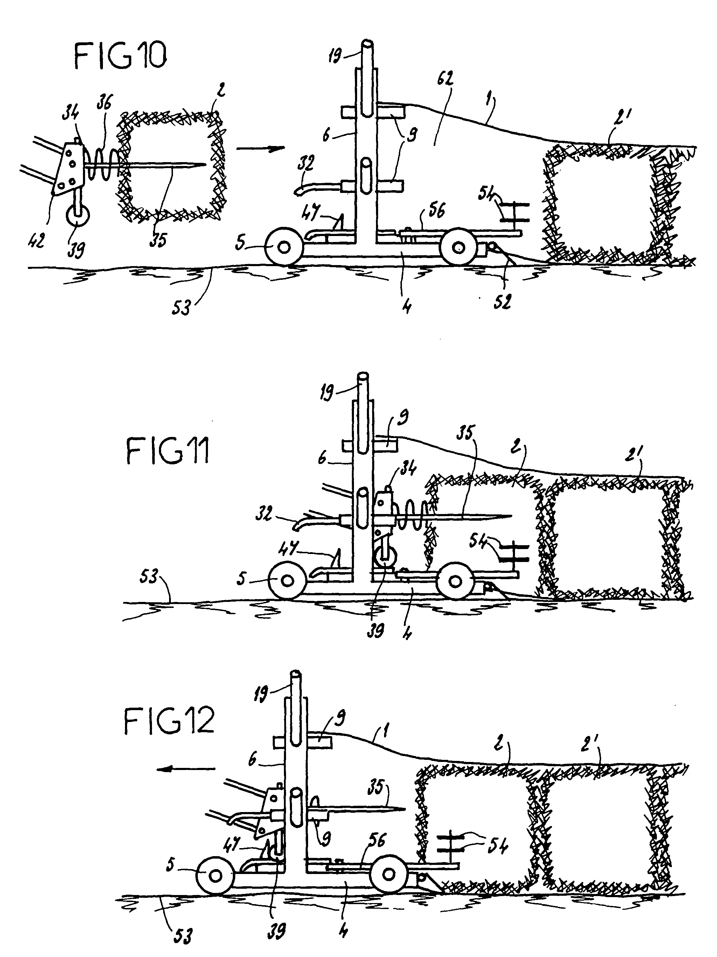

On décrit ci-après le cycle de fonctionnement de l'appareil ainsi équipé, en se référant aussi aux schémas des figures 10, 11 et 12.

Au départ du cycle, la couronne formée par la gaine 1 non dépliée passe sous les cylindres d'étirage inférieurs 24, et a été étirée par les cylindres 9 portés par les bielles 15, et maintenus écartés par la traction des vérins 19 (cette position étirée étant maintenue pendant tout le processus d'introduction d'une série de balles 2 dans la même gaine). On suppose aussi qu'au moins une précédente balle 2' a déjà été introduite précédemment dans la gaine 1, et repose sur le sol 53 avec cette gaine 1.

Dans une première phase (figure 10), le tracteur équipé du plastron 34, et transportant une nouvelle balle de fourrage 2 précédemment saisie par la broche 35, s'approche en marche avant de l'appareil, pour introduire la balle 2 dans l'ouverture de la gaine 1.

En fin d'approche, le cylindre d'attelage 39 franchit les crochets 47 en les faisant basculer vers l'arrière, et parvient en position "A" (voir figure 7). Les crochets 47 se relèvent derrière le cylindre 39 parvenu dans cette position, grâce aux ressorts de rappel 48.

En pénétrant dans la gaine 1, la nouvelle balle de fourrage 2 pousse les roues 54 latéralement vers l'extérieur, ce qui provoque une rotation de chaque bras de levier 56 suffisante pour que le doigt 59 correspondant, lié à l'axe 57, vienne se placer en appui sur la rampe inclinée latérale 61 du tiroir 50, provoquant ainsi le blocage en translation de ce tiroir 50 - voir figures 8 et 11.

Le tracteur avance jusqu'à pousser la balle de fourrage 2 contre la précédente balle 2', en comprimant le ressort 36, puis il se met à reculer de manière à déposer la balle 2 et à se dégager lui--même. Au cours du recul du tracteur, le cylindre d'attelage 39 arrive, en position "B" (figure 7), à buter sur les crochets 47 maintenus verticaux par le blocage du tiroir 50. L'appareil est alors entraîné par le recul du tracteur, et il développe la gaine 1 qui se déplie, ce mouvement se poursuivant tant que les roues 54 s'appliquent et roulent sur les flancs pleins de la gaine 1 - voir figure 12.

Lorsque les roues 54 arrivent en bout de la partie pleine de la gaine 1, elles ne trouvent plus d'appui sur les balles 2 précédemment introduites, et pénètrent dans les flancs mous de la gaine 1 - voir figure 9. Ainsi, les bras de levier 56 pivotent, en même temps que les doigts 59 et ceci sous l'effet des ressorts de rappel 60, le pivotement étant suffisant pour que chaque doigt 59 échappe à la petite rampe inclinée 61 correspondante. Le tiroir 50, alors débloqué, peut être repoussé par les galets 49 des crochets 47 qui basculent, sous la poussée du cylindre d'attelage 39, vers la position "C" (figure 7).

Le déplacement de l'appareil, ainsi désaccouplé du tracteur, s'arrête alors dans une position libérant un nouveau volume de gaine libre 62 (voir figure 10), de sorte que l'appareil est prêt pour un nouveau cycle. Le tracteur, lui-même libéré dès que le cylindre d'attelage 39 a dépassé le point de basculement extrême des crochets 47, peut aller chercher une nouvelle balle de fourrage, sans aucune autre manoeuvre particulière de son conducteur, pour l'introduire dans la gaine 1 selon un cycle similaire au précédent, et ainsi de suite, une nouvelle longueur de gaine étant dépliée à chaque cycle pour recevoir la balle à introduire lors du cycle suivant.

Pour obtenir le "pas" de déplacement optimal de l'appareil, à chaque cycle, on prévoit que les roues 54, les bras de levier 56 et les doigts 59 comportent des réglages, indispensables notamment pour l'adaptation de l'appareil à chaque type de balles de fourrage 2.

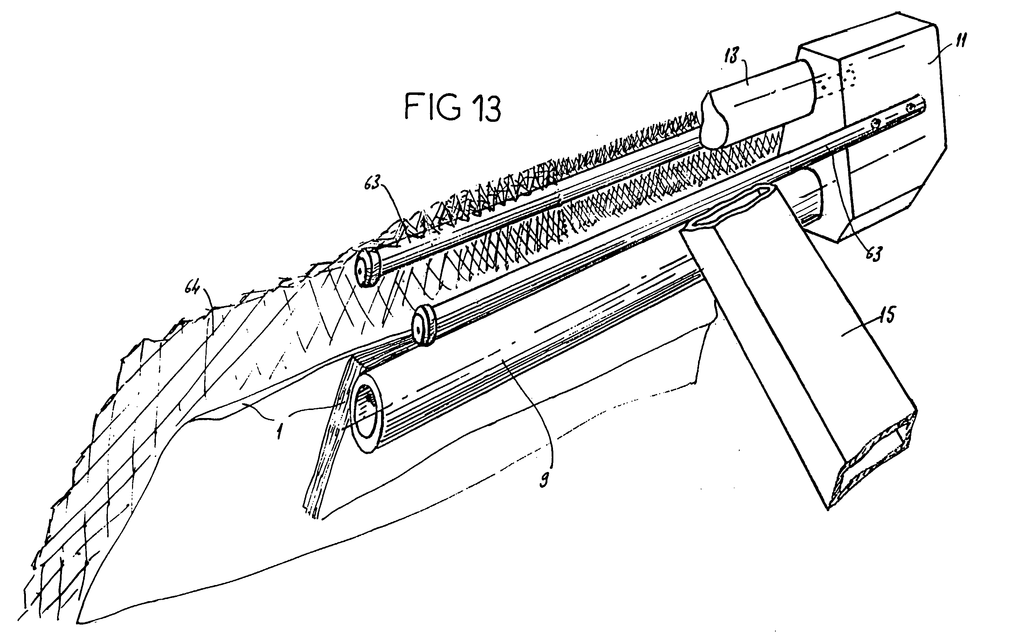

La figure 13 montre une variante de l'appareil, dans laquelle chaque palier prismatique 11, portant un cylindre d'étirage 9 comme déjà décrit plus haut, est équipé en outre de deux baguettes 63 parallèles audit cylindre 9, et fixées de part et d'autre de ce palier 11 au-dessus du cylindre d'étirage 9 sur lequel repose la couronne plissée formée par la gaine 1. Sur les baguettes 63 est posé un filet léger 64, à mailles larges, initialement plié. Le filet 64 entoure la gaine 1 et se déplie en même temps que cette gaine 1, à chaque déplacement de l'appareil. Ainsi est automatiquement déplié et posé de façon "flottante", autour de la gaine 1, un filet protecteur à effet répulsif sur les animaux nuisibles, tels que les oiseaux et les petits rongeurs.

L'invention, telle que définie dans les revendications, permet des modifications de détail, concernant par exemple :
le nombre des bielles 15 et des cylindres d'étirage 9 portés par celles-ci, le détail des moyens d'actionnement de ces bielles (les vérins 19 étant remplaçables par tous organes de traction), ou la structure des moyens de détection qui coopèrent avec les flancs de la gaine.

## Revendications

1. Appareil de gainage ou ensilage de végétaux compactés, notamment de balles (2) de fourrage, sous un film plastique tubulaire, se présentant plus particulièrement comme une gaine (1) élastiquement étirable, l'appareil comprenant un système d'étirement de la couronne formée par la gaine (1) non dépliée, pour l'introduction des balles (2) de fourrage, les éléments (9 à 23) du système d'étirement étant montés sur un cadre transversal (6) sensiblement vertical, porté par un châssis (4) monté sur des roues (5), cet appareil étant utilisable en combinaison avec un tracteur équipé d'un plastron (34) à fourche ou à broche (35) apte à recevoir une balle (2) à introduire dans la gaine (1), caractérisé en ce que :
- le châssis (4) porte au moins un crochet (47) effaçable vers l'avant et vers l'arrière, et rappelé vers une position moyenne relevée, prévu pour coopérer avec un organe transversal d'attelage tel que cylindre d'attelage (39), monté sous le plastron (34), et
- des moyens de détection (54 à 61), sensibles à la présence d'une balle (2) introduite dans la gaine (1), sont aussi portés par le châssis (4), et sont prévus pour arrêter temporairement le ou les crochets (47) en position relevée,
de telle sorte que :
- le tracteur permet l'introduction d'une balle (2) dans l'ouverture de la gaine (1) étirée, sans déplacer l'appareil, en faisant basculer le ou les crochets (47) vers l'arrière, au passage de l'organe transversal d'attelage (39),
- puis, le tracteur se dégageant, les moyens (54 à 61) de détection de la présence d'une balle (2) introduite et d'arrêt du ou des crochets (47) en position relevée sont activés, et le tracteur entraîne avec lui, par l'intermédiaire de l'organe transversal d'attelage (39) et du ou des crochets (47), l'appareil qui roule alors au sol (53) par ses roues (5), ce mouvement entraînant le dépliage d'une certaine longueur de gaine (1),
- enfin, le ou les crochets (47) sont libérés par les moyens (54 à 61) précités et, s'effaçant vers l'avant, ils(s) permet(tent) le dégagement complet du tracteur.

2. Appareil selon la revendication 1, caractérisé en ce que sont prévus deux crochets symétriques (47), normalement maintenus sensiblement verticaux par des ressorts de rappel (48), et solidaires d'un même arbre transversal (46) porté par des consoles (45) fixées sur une traverse (25) du châssis (4).

3. Appareil selon la revendication 1 ou 2, caractérisé en ce que le ou chaque crochet (47) est équipé d'un galet inférieur (49), prévu pour coopérer avec la partie antérieure d'un tiroir (50) monté coulissant en direction longitudinale sur le châssis (4) et rappelé vers l'avant par au moins un ressort (51), tandis que les moyens de détection d'une balle (2) introduite dans la gaine (14) comprennent au moins un bras de levier latéral (56) qui est monté pivotant (en 57) sur le châssis (4), qui porte au moins un organe de palpage (54) apte à s'appliquer sur un flanc de la gaine (1), et qui est solidaire d'un doigt (59) coopérant avec la partie postérieure du tiroir (50).

4. Appareil selon l'ensemble des revendications 2 et 3, caractérisé en ce que le tiroir (50) est monté coulissant à travers la traverse (25) du châssis (4), sur laquelle sont fixées les consoles (45) précitées.

5. Appareil selon la revendication 3 ou 4, caractérisé en ce que le ou chaque bras de levier (56) est monté pivotant sur le châssis (4) autour d'un axe sensiblement vertical (57), et porte vers son extrémité libre, en tant qu'organe(s) de palpage, au moins une roue horizontale (54), montée librement tournante sur un arbre vertical (55).

6. Appareil selon l'une quelconque des revendications 3 à 5, caractérisé en ce que la partie postérieure du tiroir (50) comporte au moins une petite rampe inclinée latérale (61), avec laquelle coopère le doigt (59) solidaire du bras de levier (56).

7. Appareil selon l'une quelconque des revendications 1 à 6, caractérisé en ce que le système d'étirement comprend un ensemble de bielles (15) toutes articulées par une extrémité sur le cadre transversal (6) autour d'axes (17) sensiblement horizontaux et parallèles entre eux, chaque bielle (15) portant vers son extrémité libre ou tête (14) un cylindre d'étirage (9) monté libre en rotation autour d'un axe parallèle à l'axe d'articulation (17) de cette bielle (15) sur le cadre (6), le cylindre (9) étant prévu pour être engagé dans la couronne formée par la gaine (1) non dépliée, et des moyens d'actionnement (19) étant prévus pour commander la rotation simultanée de toutes les bielles (15), dans un sens correspondant à l'ouverture de ladite couronne, de manière à obtenir un étirement homogène de la gaine (1).

8. Appareil selon la revendication 7, caractérisé en ce que les moyens d'actionnement comprennent, pour chaque bielle (15) portant un cylindre d'étirage (9), un vérin hydraulique (19) dont la tige (20) est articulée par son extrémité (21) à la tête (14) de la bielle (15), et dont le corps (22) est lié de façon articulée (en 23) au cadre (6).

9. Appareil selon la revendication 8, caractérisé en ce que les vérins hydrauliques (19) d'actionnement des bielles (15) sont eux-mêmes actionnés par un distributeur hydraulique manuel, prévu pour être relié momentanément à la pompe hydraulique du tracteur agricole.

10. Appareil selon l'une quelconque des revendications 7 à 9, caractérisé en ce que la tête (14) de chaque bielle (15) porte un palier (11) monté oscillant autour d'un axe (13) parallèle à l'axe d'articulation (17) de la bielle (15) sur le cadre (6), le palier (11) portant lui-même le cylindre d'étirage (9), monté libre en rotation autour d'un axe parallèle à l'axe d'oscillation (13) du palier (11), de manière à autoriser un mouvement pendulaire (16) de chaque cylindre (9), relativement à la tête de bielle (14) associée.

11. Appareil selon la revendication 10, caractérisé en ce que, compte tenu du décalage longitudinal entre la tête (14) de chaque bielle (15) et le palier (11) associé, cette tête (14) se situe sensiblement au milieu de la longueur du cylindre d'étirage (9) associé.

12. Appareil selon l'une quelconque des revendications 7 à 11, caractérisé en ce que les bielles (15) et leurs moyens d'actionnement, tels que vérins (19), sont montés uniquement sur les montants latéraux (7) du cadre transversal (6), et en ce que chaque montant latéral (7) est lui-même monté tournant sur 90° autour d'un axe vertical, par des pivots inférieur (26) et supérieur (27), pour permettre un rabattement de ce montant (7) et des bielles (15), avec leurs moyens d'actionnement (19), dans un plan parallèle à la direction longitudinale de l'appareil, de manière à réduire la largeur de celui-ci pour son déplacement, des moyens (30,31) étant prévus pour immobiliser les montants (7) en position déployée de travail et en position rabattue.

13. Appareil selon l'une quelconque des revendications 7 à 12, caractérisé en ce que le système d'étirement de la gaine (1) comprend encore des cylindres d'étirage inférieurs (24), libres en rotation mais d'axes fixes.

14. Appareil selon la revendication 13, caractérisé en ce que les cylindres d'étirage inférieurs (24) sont portés par une traverse (25) du châssis (4), notamment une traverse (25) située à la base du cadre (6).

15. Appareil selon l'ensemble des revendications 10 et 14, caractérisé en ce que le système d'étirement de la gaine (1) est complété par des guides (32) cintrés vers l'extérieur, fixés sur les paliers (11) précités portant les cylindres d'étirage (9), et par des guides inférieurs (33) en forme de ski inversé, fixés à la traverse (25) précitée du châssis (4).

16. Appareil selon l'une quelconque des revendications 1 à 15, caractérisé en ce qu'il est pourvu de moyens (63) prévus pour déployer, en même temps que la gaine (1), un filet flottant (64) entourant cette gaine (1) et ayant un effet répulsif sur les animaux nuisibles, tels qu'oiseaux et petits rongeurs.

17. Appareil selon l'ensemble des revendications 10 et 16, caractérisé en ce que les moyens de déploiement du filet (64) sont constitués, au niveau de chaque cylindre d'étirage (9), par deux baguettes (63) fixées de part et d'autre du palier (11) portant ledit cylindre (9), et parallèles à l'axe de ce cylindre (9), le filet (64) initialement plié étant posé sur les baguettes (63).

## Patentansprüche

1. Gerät zum Überziehen oder Einsilieren von gepresstem Pflanzengut, besonders von Ballen (2) von Viehfutter, mit einer Schlauchfolie, die sich insbesondere wie ein elastisch aufspannbarer Schlauch (1) darstellt, wobei das Gerät ein System zum Aufspannen des von dem nicht auseinandergefalteten Schlauch (1) gebildeten Kranzes zum Einführen der Futterballen (2) umfasst, wobei die Elemente (9 bis 23) des Aufspannsystems auf einem deutlich vertikalen Querrahmen (6) montiert sind, der von einem auf Räder (5) montierten Chassis (4) getragen wird; dieses Gerät ist in Kombination mit einem Traktor einsetzbar, der mit einem Vorsatz (34) mit Gabel oder mit Dorn (35) ausgerüstet ist, der geeignet ist, einen Ballen (2) zur Einführung in den Schlauch (1) aufzunehmen, dadurch gekennzeichnet, dass:
- das Chassis (4) mindestens einen Haken (47) aufweist, der nach vorne und nach hinten versenkbar ist und zurückgestellt werden kann in eine mittlere aufrechte Position, und vorgesehen ist, um mit einer querliegenden Kupplungsvorrichtung, wie einer Kupplungswalze (39), zusammenzuarbeiten, die unter dem Vorsatz (34) montiert ist, und
- Detektionsmittel (54 bis 61), die auf das Vorhandensein eines in den Schlauch (1) eingeführten Ballens (2) reagieren, die auch von dem Chassis (4) getragen werden, und vorgesehen sind, um den oder die Haken (47) zeitweise in aufrechter Position festzuhalten,
in der Weise, dass:
- der Traktor einen Ballen (2) in die Öffnung des aufgespannten Schlauchs (1) einführen kann, ohne das Gerät zu verschieben, indem er den oder die Haken (47) bei Durchlauf der querliegenden Kupplungsvorrichtung (39) nach hinten schwenken lässt,
- dann, wenn der Traktor sich loskoppelt, die Detektionsmittel (54 bis 61) für das Vorhandensein eines eingeführten Ballens (2) und zum Festhalten des oder der Haken (47) in aufrechter Position aktiviert werden, und der Traktor, vermittels der querliegenden Kupplungsvorrichtung (39) und des oder der Haken (47), das Gerät mit sich zieht, das dann mit seinen Rädern (5) auf dem Boden (53) rollt, wobei diese Bewegung das Auseinanderfalten einer bestimmten Schlauchlänge (1) nach sich zieht,
- schliesslich der oder die Haken (47) durch die vorgenannten Mittel (54 bis 61) freigegeben werden und, indem er/sie sich nach vorn versenken, erlaubt er bzw. erlauben sie das vollständige Abkoppeln des Traktors.

2. Gerät nach Anspruch 1, dadurch gekennzeichnet, dass zwei symmetrische Haken (47) vorgesehen sind, die normalerweise von Rückholfedern (48) deutlich senkrecht gehalten werden und integraler Bestandteil ein- und derselben Querwelle (46) sind, die von Konsolen (45) getragen wird, die auf einer Querstrebe (25) des Chassis (4) befestigt sind.

3. Gerät nach Anspruch 1 oder 2, dadurch gekennzeichnet, dass der oder jeder Haken (47) mit einer unteren Rolle (49) ausgestattet ist, die dazu dient, mit dem vorderen Teil eines Zugarms (50) zusammenzuarbeiten, der in Längsrichtung gleitend auf dem Chassis (4) montiert ist und nach vorn durch mindestens eine Feder (51) gestellt wird, während die Mittel zur Detektion eines in den Schlauch (1) eingeführten Ballens (2) mindestens einen seitlichen Hebelarm (56) umfassen, der drehbar (um 57) auf dem Chassis (4) befestigt ist, und der mindestens einen Fühler (54) trägt, der geeignet ist, sich an eine Flanke des Schlauchs (1) genau anzulegen, und der integraler Bestandteil eines Fingers (59) ist, der mit dem hinteren Teil des Zugarms (50) zusammenarbeitet.

4. Gerät nach der Gesamtheit der Ansprüche 2 und 3, dadurch gekennzeichnet, dass der Zugarm (50) quer durch die Querstrebe (25) des Chassis (4) gleitend montiert ist, auf der die vorgenannten Konsolen (45) befestigt sind.

5. Gerät nach Anspruch 3 oder 4, dadurch gekennzeichnet, dass der oder jeder Hebelarm (56) um eine deutlich senkrechte Achse (57) drehbar auf dem Chassis (4) montiert ist und nach seinem freien Ende hin, als Fühler, mindestens ein horizontales Rad (54) trägt, das auf einer senkrechten Welle (55) frei drehend montiert ist.

6. Gerät (Maschine) nach einem beliebigen der Ansprüche 3 bis 5, dadurch gekennzeichnet, dass der hintere Teil des Zugarms (50) mindestens eine kleine seitliche schräge Rampe (61) umfasst, mit der der Finger (59) zusammenarbeitet, der integraler Bestandteil des Hebelarms (56) ist.

7. Gerät nach einem beliebigen der Ansprüche 1 bis 6, dadurch gekennzeichnet, dass das Aufspannsystem ein Ensemble von Stäben (15) umfasst, die alle mit einem Ende auf dem Querrahmen (6) um Achsen (17) angelenkt sind, die deutlich horizontal und parallel zueinander sind, wobei jeder Stab (15) nach seinem freien Ende oder Kopf (14) hin einen Aufspannzylinder (9) trägt, der frei drehbar um eine Achse montiert ist, die zur Gelenkachse (17) dieses Stabs (15) auf dem Rahmen (6) parallel ist, , wobei der Zylinder (9) dazu dient, in den vom nicht entfalteten Schlauch (1) gebildeten Kranz hineingesteckt zu werden, und wobei Antriebsmittel (19) vorgesehen sind, um die gleichzeitige Drehung aller Stäbe (15) in eine Richtung zu steuern, die dem Öffnen dieses Kranzes entspricht, um auf diese Weise ein gleichmässiges Aufspannen des Schlauchs (1) zu erreichen.

8. Gerät nach Anspruch 7, dadurch gekennzeichnet, dass die Antriebsmittel für jeden einen Aufspannzylinder (9) tragenden Stab (15) einen hydraulischen Zylinder (19) umfassen, dessen Kolben (20) an seinem Ende (21) am Kopf (14) des Stabs (15) angelenkt ist, und dessen Körper (22) mit einem Gelenk (an 23) mit dem Rahmen (6) verbunden ist.

9. Gerät nach Anspruch 8, dadurch gekennzeichnet, dass die hydraulischen Zylinder (19) zum Antrieb der Stäbe (15) ihrerseits von einem handbedienten hydraulischen Verteiler angetrieben werden, der vorgesehen ist, um augenblicklich an die hydraulische Pumpe des landwirtschaftlichen Traktors angeschlossen zu werden.

10. Gerät nach einem beliebigen der Ansprüche 7 bis 9, dadurch gekennzeichnet, dass der Kopf (14) jedes Stabs (15) ein Lager (11) trägt, das pendelnd um eine Achse (13) montiert ist, die parallel zur Gelenkachse (17) des Stabs (15) auf dem Rahmen (6) ist, wobei das Lager selbst den Aufspannzylinder (9) trägt, der frei um eine Achse drehend montiert ist, die zur Pendelachse (13) des Lagers (11) parallel ist, in der Weise, dass eine Pendelbewegung (16) jedes Zylinders (9), relativ zum zugehörigen Stabkopf (14) ermöglicht wird.

11. Gerät nach Anspruch 10, dadurch gekennzeichnet, dass sich - unter Berücksichtigung der Längsverschiebung zwischen dem Kopf (14) jedes Stabs (15) und dem zugehörigen Lager (11) - dieser Kopf (14) deutlich in der Mitte der Länge des zugehörigen Aufspannzylinders (9) befindet.

12. Gerät nach einem beliebigen der Ansprüche 7 bis 11, dadurch gekennzeichnet, dass die Stäbe (15) und ihre Antriebsmittel, etwa Zylinder (19), ausschliesslich auf den seitlichen Ständern (7) des Querrahmens montiert sind, und dadurch, dass jeder seitliche Ständer (7) seinerseits durch einen unteren (26) und einen oberen (27) Drehzapfen um eine vertikale Achse um 90° drehbar montiert ist, um ein Umklappen dieses Ständers (7) und der Stäbe (15) mit ihren Antriebsmitteln (19) zu ermöglichen, und zwar in einer Ebene parallel zur Längsrichtung des Geräts, so dass dessen Breite bei einem Standortwechsel reduziert wird, wobei Mittel (30, 31) vorgesehen sind, um die Ständer (7) in ausgefahrener Arbeitsstellung und in umgeklappter Stellung festzuhalten.

13. Gerät nach einem beliebigen der Ansprüche 7 bis 12, dadurch gekennzeichnet, dass das Aufspannsystem des Schlauchs (1) noch untere Aufspannzylinder (24) umfasst, die frei drehen, aber feste Achsen haben.

14. Gerät nach Anspruch 13, dadurch gekennzeichnet, dass die unteren Aufspannzylinder (24) von einer Querstrebe (25) des Chassis (4) getragen werden, insbesondere einer Querstrebe (25), die sich an der Basis des Rahmens (6) befindet.

15. Gerät nach der Gesamtheit der Ansprüche 10 und 14, dadurch gekennzeichnet, dass das Aufspannsystem des Schlauchs (1) von nach aussen gebogenen Führungsschienen (32) vervollständigt wird, die auf den vorgenannten, die Aufspannzylinder (9) tragenden Lagern (11) befestigt sind, und von unteren Führungsschienen (33) in Form eines umgekehrten Ski, die an der vorgenannten Querstrebe (25) des Chassis (4) befestigt sind.

16. Gerät nach einem beliebigen der Ansprüche 1 bis 15, dadurch gekennzeichnet, dass es mit Mitteln (63) versehen ist, die dazu dienen, gleichzeitig mit dem Schlauch (1) ein loses Netz (64) auszufahren, das diesen Überzug (1) umfängt und eine abweisende Wirkung auf schädliche Tiere hat, wie Vögel und kleine Nager.

17. Gerät nach der Gesamtheit der Ansprüche 10 und 16, dadurch gekennzeichnet, dass die Mittel zum Ausfahren des Netzes (64) im Bereich jedes Aufspannzylinders (9) von zwei Stäben (63) gebildet sind, die auf der einen und der anderen Seite des den Zylinder (9) tragenden Lagers (11) befestigt sind und parallel zur Achse dieses Zylinders (9) laufen, wobei das anfänglich gefaltete Netz auf den Stäben (63) liegt.

## Claims

1. An apparatus for the sheathing of or for the production of silage from compacted vegetable matter, particularly bales (2) of fodder, in a tubular plastics film, more particularly in the form of an elastically stretchable sheath (1), said apparatus comprising a stretching system for the ring formed by the sheath (1), which is not fully unfolded, for the introduction of bales (2) of fodder, the elements (9 to 23) of the stretching system being mounted on a substantially vertical transverse frame (6) borne by a chassis (4) mounted on wheels (5), said apparatus being usable in combination with a tractor equipped with a front plate (34) comprising a fork or spike (35) and suitable for receiving a bale (2) to be introduced into the sheath (1), characterised in that
- the chassis (4) carries at least one catch (47), which can be retracted forwards or backwards and which can be returned to a middle, raised position, and which is provided for cooperating with a transverse coupling element such as a coupling cylinder (39) which is mounted under the front plate (34), and
- means of detection (54 to 61) which can sense the presence of a bale (2) which is introduced in the sheath (1) are also borne by the chassis (4) and are provided for temporarily locking the catch or catches (47) in their raised position,
in a manner such that
- the tractor enables a bale (2) to be introduced in the opening of the stretched sheath (1) without displacing the apparatus, by causing the catch or catches (47) to be retracted backwards when the transverse coupling element (39) crosses it/them,
- the tractor is then disengaged, the means (54 to 61) for detecting the presence of an introduced bale (2) and for locking the catch or catches (47) in their raised position are activated, and the tractor pulls the apparatus with it, via the transverse coupling element (39) and via the catch or catches (47), which apparatus then travels on the ground (53) on its wheels (5), said movement causing the unfolding of a certain length of sheath (1),
- finally, the catch or catches (47) is/are freed by the aforementioned means (54 to 61) and is/are retracted forwards to permit the complete disengagement of the tractor.

2. An apparatus according to claim 1, characterised in that two symmetrical catches (47) are provided, which are normally maintained substantially vertical by return springs (48), and which are integral with the same transverse shaft (46) which is borne by brackets (45) fixed to a crossbeam (25) of the chassis (4).

3. An apparatus according to claims 1 or 2, characterised in that the or each catch (47) is equipped with a lower roller (49) which is provided for cooperating with the back part of a slide (50) which is mounted so that it can slide longitudinally on the chassis (4) and which is returned to the front by at least one spring (51), whilst the means for detecting a bale (2) introduced into the sheath (14) comprise at least one lateral lever arm (56) which is swivel-mounted (at 57) on the chassis (4), which carries at least one feeler element (54) suitable for application to a side of the sheath (1), and which is integral with a cam finger (59) which cooperates with the back part of the slide (50).

4. An apparatus according to claims 2 and 3 together, characterised in that the slide (50) is mounted so that it can slide across the crossbeam (25) of the chassis (4) to which the aforementioned brackets (45) are fixed.

5. An apparatus according to claims 3 or 4, characterised in that the or each lever arm (56) is mounted on the chassis (4) so that it can swivel about a substantially vertical pivot (57), and carries, towards its free end, at least one horizontal wheel (54) as a feeler element, which is mounted so that it can turn freely on a vertical shaft (55).

6. An apparatus according to any one of claims 3 to 5, characterised in that the back part of the slide (50) comprises at least one small inclined lateral ramp (61), which cooperates with the cam finger (59) which is integral with the lever arm (56).

7. An apparatus according to any one of claims 1 to 6, characterised in that the stretching system comprises a system of connecting rods (15) which are all swivel-mounted at one end on the transverse frame (6) about axes (17) which are substantially horizontal and parallel to each other, each connecting rod (15) bearing towards its free end or head (14) a stretching cylinder (9) which is mounted so that it can freely rotate about an axis parallel to the axis of articulation (17) of said connecting rod (15) on the frame (6), said cylinder (9) being provided for engaging in the ring formed by the sheath (1) which is not fully unfolded, and actuating means (19) being provided for controlling the simultaneous rotation of all the connecting rods (15) in a direction corresponding to the opening of said ring, so as to effect homogeneous stretching of the sheath (1).

8. An apparatus according to claim 7, characterised in that, for each connecting rod (15) bearing a stretching cylinder (9), the actuating means comprise a hydraulic actuator (19), the shank (20) of which is jointed at its end (21) to the head (14) of the connecting rod (15), and the body (22) of which is linked in an articulated manner (at 23) to the frame (6).

9. An apparatus according to claim 8, characterised in that the hydraulic actuators (19) for actuating the connecting rods (15) are themselves actuated by a manually connected hydraulic distributor which is provided for temporary connection to the hydraulic pump of the agricultural tractor.

10. An apparatus according to any one of claims 7 to 9, characterised in that the head (14) of each connecting rod (15) carries a bearing (11) mounted so that it can oscillate about an axis (13) parallel to the axis of articulation (17) of the connecting rod (15) on the frame (6), said bearing (11) itself carrying the stretching cylinder (9), which is mounted so that it can freely rotate about an axis parallel to the axis of oscillation (13) of the bearing (11), so as to permit a swinging movement (16) of each cylinder (9) in relation to the head of the associated connecting rod (14).

11. An apparatus according to claim 10, characterised in that, taking into account the longitudinal displacement between the head (14) of each connecting rod (15) and the associated bearing (11), said head (14) is situated substantially in the middle of the length of the associated stretching cylinder (9).

12. An apparatus according to any one of claims 7 to 11, characterised in that the connecting rods (15) and their actuating means, such as the actuators (19), are mounted solely on the lateral mountings (7) on the transverse frame (6), and that each lateral mounting (7) is itself mounted, by means of lower (26) and upper (27) pivots, so that it can turn by 90° about a vertical axis, in order to permit said mounting, and the connecting rods (15) with their actuating means (19), to be folded back within a plane parallel to the longitudinal direction of the apparatus, so as to reduce the width of the latter for the movement thereof, means (30, 31) being provided for immobilising the mountings (7) in a spread-out working position and in a folded-back position.

13. An apparatus according to any one of claims 7 to 12, characterised in that the sheath stretching system (1) also comprises lower stretching cylinders (24) which can freely rotate but the axes of which are fixed.

14. An apparatus according to claim 13, characterised in that the lower stretching cylinders (24) are borne by a crossbeam (25) of the chassis (4), particularly a crossbeam (25) situated at the base of the frame (6).

15. An apparatus according to claims 10 and 14 together, characterised in that the sheath stretching system (1) is completed by outwardly curved guides (32) which are fixed to the aforementioned bearings (11) which carry the stretching cylinders (9), and by lower guides (33) in the form of inverted skids which are fixed to the aforementioned crossbeam (25) of the chassis (4).

16. An apparatus according to any one of claims 1 to 15, characterised in that it is provided with means (63) for spreading, at the same time as the sheath (1), a floating net (64) which surrounds said sheath (1) and which acts to repel pests such as birds and small rodents.

17. An apparatus according to claims 10 and 16 together, characterised in that the means for spreading the net (64) consist of two rods (63) at each stretching cylinder (9) which are fixed to both sides of the bearing (11) carrying said cylinder (9) and which are parallel to the axis of said cylinder (9), the net (64), which is initially folded, being placed on the rods (63).
